# EUROPEAN PATENT SPECIFICATION

(11) **EP 1 856 760 B1**
(45) Date of publication and mention of the grant of the patent: **17.03.2010**
(21) Application number: 06710677.3
(22) Date of filing: 16.01.2006
(51) Int. Cl.: H01M 10/44, H01M 10/48

(54) **ARRANGEMENT AND METHOD FOR MONITORING PRESSURE WITHIN A BATTERY CELL**
ANORDNUNG UND VERFAHREN ZUR DRUCKÜBERWACHUNG IN EINER BATTERIEZELLE
DISPOSITIF ET MÉTHODE POUR SURVEILLER LA PRESSION DANS UNE BATTERIE

(30) Priority: 20.01.2005 EP 05100335
(43) Date of publication of application: 21.11.2007
(73) Proprietor: Koninklijke Philips Electronics N.V., 5621 BA Eindhoven (NL); Philips Intellectual Property & Standards GmbH, 20099 Hamburg (DE)
(72) Inventor: NOTTEN, Peter, NL-5656 AA Eindhoven (NL); HETZENDORF, Georg, NL-5656 AA Eindhoven (NL); RIEMSCHNEIDER, Karl-ragmar, NL-5656 AA Eindhoven (NL)
(74) Representative: Schouten, Marcus Maria
(86) International application number: PCT/IB2006/050148
(87) International publication number: WO 2006/077519

(56) References cited:
- EP-A- 1 073 132
- EP-B- 0 767 984
- US-A- 5 640 077
- US-A- 5 694 018
- US-A1- 2002 119 364

## Description

The invention relates to an arrangement for monitoring pressure within a battery cell, comprising: at least one battery cell, and at least one strain gauge for monitoring mechanical deformation of the battery cell, said strain gauge being at least partially wound around a cell casing of said battery cell. The invention also relates to a method of monitoring internal pressure of a battery cell, comprising the step of: A) measuring the mechanical deformation of a battery cell by at least one strain gauge attached to an outer surface of a cell casing of said battery.

In the technical field of batteries efforts are made to improve the technology of measuring battery parameters. Battery monitor systems measure and collect the status of the battery and display results. Battery management systems control the charge phase and partly the discharge phase, based on measurements. The measurement values are often parameters of mathematical models describing the status of the battery. These models form the basis for control programs of microprocessor-based battery monitor and management systems.

Important physical values that should be collected in a battery are current, voltage, temperature and pressure. The latter three are specifically important for the modelling of multi-cell batteries if the physical value can be measured per cell.

In the literature (for example H.J. Bergveld/ W.S. Kruijt/ P.H.L. Notten, Battery Management Systems, Kluwer Academic Publishers 2002, ISBN 1-4020-0832 or P.H.L. Notten Rechargeable nickel-metal hydride batteries: successful new concept, in Interstitial intermetallic alloys, chapter 7, in Nato ASI Series E 281 (1995) 151, Edts. F. Grandjean, G.J. Long and K.H.J. Buschow, ISBN 0-7923-3299-7) the influence of voltage, temperature and pressure on the status of battery cells is described in detail. For example, the generation of gas in a Nickel-Cadmium cell both in the overcharge and over-discharge mode should be mentioned. These modes result in rising gas pressures in gastight cells.

United States Patent US 5,694,018 discloses an assembly of a battery charging compartment and a battery positioned in said compartment, wherein the battery compartment is provided with a strain gauge for unilaterally monitoring the deformation of the battery introduced by elevated pressure within the battery (and partially the temperature introduced expansion) to activate a simple mechanical switch. Thereby the charging current is interrupted. It is also proposed to use a bridge measuring the expansion for the electrical determination of the mechanical deformation. However, this known arrangement has multiple drawbacks. A major drawback of this known arrangement will be elucidated hereinafter.

A clear trend in the battery industry is namely to strive for higher energy density. The energy density is primarily described by electrical battery capacity per battery mass (measured in Wh/kg). The ratio battery capacity to volume (Wh/cm3) plays a secondary role. The mass of the cell boundaries is not negligible, since it is most common to use metal cans. Often the can is punched or rolled from metal sheet, for cylindrical cells formed as a beaker or bushing. Besides the requirement of electrical conductivity, metal cans fulfil the specifications for resistance to pressure. In order to reduce mass and material, sheets of reduced thickness are used. Cell boundaries of reduced strength are much more exposed to mechanical deformation, as the inner pressure is increased. Due to the thinner sheet, the maximum tolerable pressure is lower. This leads to an increased necessity to monitor a significant pressure rise earlier and more precisely than is possible by means of the known arrangement as disclosed in United States Patent US 5,694,018 as mentioned above. Only then it is possible to avoid partial damage to thin cans by too high an inner pressure.

The measurement of the cell pressure is difficult because of the nature of the electrolytic material (most common are high viscosity fluids or gels) and/or its chemical aggressiveness. No commonly used means of pressure measurement can be used. Typically used sensors with membranes are not part of the possible solutions; also micro-electromechanical pressure sensors do not fit. Smaller cells are very cost-sensitive due to their high production volumes. They have mature production technologies. For most of the cells, standardized outer boundaries are given. Therefore, it is most advantageous to stick to the existing constructions and add only a few supplementing parts.

United States Patent Application 2002/0119364 discloses an assembly of an arrangement according to the preamble and a charger, wherein a processor of said charger can be electrically connected to the strain gauge of the battery during charging. An important drawback of this known assembly is that monitoring the battery pressure is merely possible during charging by the charger. It is an object of the invention to provide an improved arrangement for monitoring the actual internal pressure of a battery cell more accurately.

This object can be achieved by providing an arrangement according to the preamble, characterized in that said strain gauge is electronically coupled to a processing unit attached to the cell casing for processing the mechanical deformation monitored by the strain gauge. Commonly said processing unit is relatively small, and may be formed by a small chip incorporating an electronic circuit. The change of the effective coil area leads to a change of the AC- and RF-parameters of the coil, and in particular to a change of the inductivity. These changes can be observed as complex impedance. It is also proposed to observe the resonance behaviour of the electronic circuit, including the, preferably coil-shaped, strain gauge. This resonance behaviour will change due to the change of the coil dimensions. In a particularly preferred embodiment, said processing unit is adapted to communicate, preferably wirelessly, with an external device, such as a battery management system. Battery management systems control the charge phase and partly the discharge phase, based on measurements as mentioned above.
In the arrangement according to the invention, the strain gauge, preferably formed by a measurement line, is in intensive contact with the battery cell of which the internal pressure is monitored. In this manner, the pressure built up within the battery cell can be monitored relatively carefully through the (elastic) deformation, in particular stretching or changing of the winding area, of the strain gauge. Moreover, since a cell casing commonly does not have a uniform strength, it is advantageous to wind the strain gauge at least partially around an outer surface of the cell casing, thereby covering a substantial part of the cell casing, which commonly leads to relatively quick and accurate monitoring of deformation of the cell casing and hence of a (significant) pressure rise within the battery cell. Preferably, said strain gauge is at least partially wound helically around said cell casing. To this end, said strain gauge is preferably at least substantially coil-shaped to be able to cover the cell casing in an optimal way. In this way a slight deformation in a - possibly present - weaker part of the cell casing can be detected relatively quickly and precisely. In fact, stretching of the windings changes the ohmic resistance of the strain gauge. The change of the geometry can be observed relatively precisely, if the recent measurement is compared to the measurement of the non-stretched lines. The strain gauge should preferably be made of appropriate materials, for example materials with a stable specific resistance, independent of temperature variances. Since the strain gauge is applied to an outer surface of the cell casing, there is no direct contact between the strain gauge and the chemical reactants within the cell casing. For this reason, corrosion of the strain gauge will not occur under normal conditions, which gives the arrangement according to the invention an advantageous durability.

In a further preferred embodiment the processing unit comprises a calibration arrangement. The calibration arrangement can also be part of an external device, such as a microprocessor supporting control unit. In this calibration arrangement the pressure measurement values will be stored of well-defined conditions and states of the battery cells. For example the starting conditions of a non-aged, well-charged or non-loaded cell can be stored as calibration values, assuming non-increased pressure values. Also, calibration values can be related to cell temperature or cell voltage. By storing the calibration values, production tolerances and measurement errors, for example introduced by temperature and voltage, can be widely compensated. In this manner it is possible that only differences from the stored calibration values are used to estimate the deformation.

Besides the pressure measurement function, the measurement line can be used also as a loop or coil antenna for wireless communication with the cell sensor. Typically, these functions do not interact, since different frequencies are used for communication and pressure measurement. For pressure measurement use can also be made of direct current, provided that no impedance measurement is made. In a preferred embodiment, said processing unit is powered by means of induced electricity. However, it is also conceivable that said processing unit is powered by the battery cell. In a particularly preferred embodiment, said strain gauge is also adapted for use as an antenna to allow the processing unit to communicate with the external device. At high frequencies, the reduction of the number of windings, in the extreme to a single loop, could be suitable. This is especially necessary if the antenna needs to be effective at higher communication frequencies. In a further preferred embodiment, the pressure values, in addition to other parameters like cell voltage and temperature, will be used for electronic switching within the battery. Here the pressure strain gauge can be connected in such a way that it can be used as a bypass line to prevent overcharging of the battery cell by passing a fraction of the charging current around the battery cell.

Preferably, said battery cell comprises an outer hull, wherein the strain gauge is substantially positioned between the cell casing and the outer hull. In this manner the strain gauge is protected by a shielding cover which is formed by the, preferably elastic, hull. In this way, the strain gauge is positioned in a covered manner within the boundaries of the battery cell.

In a preferred embodiment, said arrangement comprises multiple battery cells, wherein the strain gauge is at least partially wound around the cell casing of each battery cell. It is imaginable to apply multiple strain gauges, wherein each strain gauge could be wound around a respective battery cell. If a group of cells is observed with a joint strain gauge, the sensing arrangement should preferably be able to detect an overpressure condition of any individual cell forming part of that group.

The invention also relates to a method of monitoring pressure within a battery cell according to the preamble, characterized in that the method further comprising the steps of: B) processing the mechanical deformation monitored by the strain gauge by means of a processing unit electronically coupled to said strain gauge to obtain pressure related data, and C) allowing the processing unit to communicate with an external device for wireless transmission of the pressure related data from the processing unit to said external device. In a preferred embodiment, communication between the processing unit and the external device according to step C) is realized by means of the strain gauge acting as antenna. Further advantages and alternatives have been elucidated above in a comprehensive manner.

The invention can be further illustrated by way of the following non-limitative embodiments, wherein:
Fig. 1 shows a coil-shaped measurement line around the cell jacket of a cylindrical cell,
Fig. 2 shows the deformation of the measurement line shown in Figure 1 due to a pressure rise,
Fig. 3 shows a double coil-shaped measurement line around two cylindrical cells connected to one cell sensor,
Fig. 4 shows the deformation of the arrangement shown in Figure 3 due to a pressure rise,
Fig. 5 shows another arrangement according to the invention in a normal state, and
Fig. 6 shows the arrangement shown in Figure 5 in an expanded state.

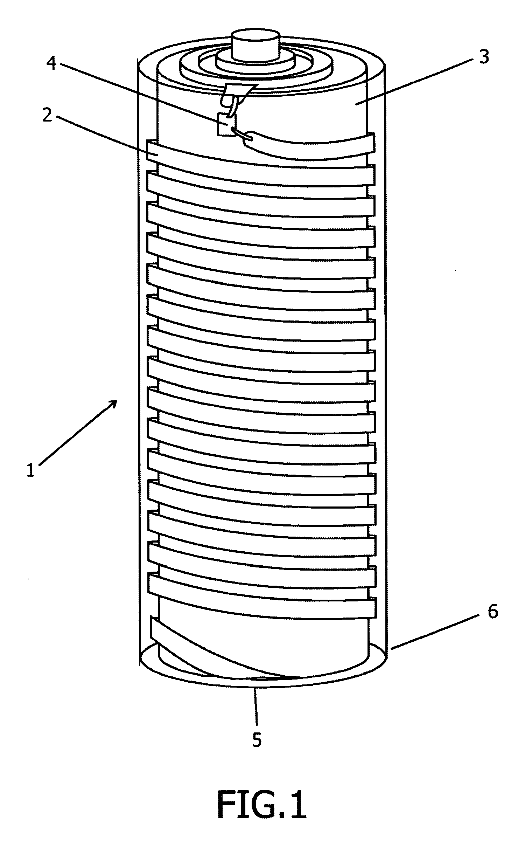

Figure 1 shows a coil-shaped measurement line around the cell jacket of a cylindrical cell 1, comprising a cell jacket 3 around which a measurement line 2 is wound in a coil-shaped manner. One end of the measurement line 2 is connected to a cell sensor 4. The other end of the measurement line 2 is connected to a pole 5 of the cell 1. The cell jacket 3 is located within an elastic outer hull 6, for example a sleeve made from soft plastics or foam plastic. The cell 1 should allow expansion of the mechanical dimensions of the cell during pressure generation within the cell 1.

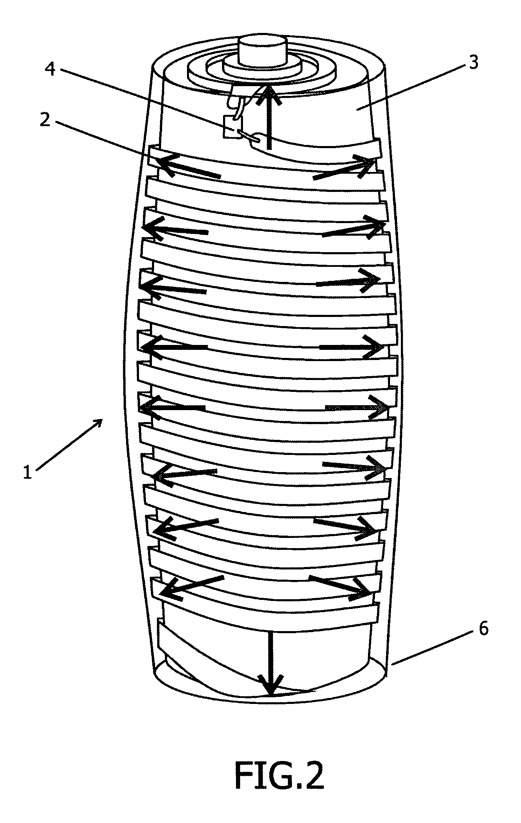

Figure 2 shows the deformation of the measurement line 2 shown in Figure 1 due to a pressure rise in the cell 1. In this Figure, the expanded barrel-shaped cell jacket 3 is shown. It is expanded within the elastic outer hull 6. It should be obvious that the coil 2 has its maximum enlargement of the diameter in the middle of the cell 1. Due to this fact, the circumference (the length of the measurement line) and the effective area of the coil 2 have been enlarged to a maximum, resulting in changed physical properties of the measurement line 2 which can be monitored by the sensor 4.

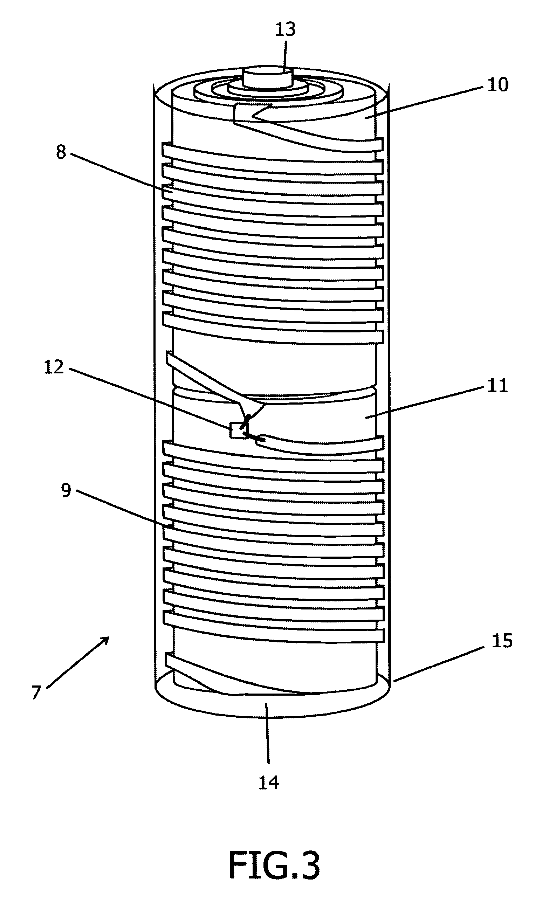

Figure 3 shows another preferred embodiment of an arrangement 7 according to the invention. The arrangement 7 comprises two measurement lines 8, 9 which are wound helically around two respective cylindrical cells 10, 11. The measurement lines 8, 9 are mutually connected by means of a single cell sensor 12. The upper cell 10 and the lower cell 11 are connected in series. The respective measurement lines 8, 9 are connected to opposite poles 13, 14 of the cells 10, 11. The cell sensor 12 observes the group of cells 10, 11. The upper measurement line 8 leads from the upper pole 13 of the upper cell 10 to the sensor 12. A further measurement line 9 leads from the opposite pole 14 of the lower cell 11 to the cell sensor 12. Both measurement lines 8, 9 are coil-shaped and surround the jackets of both cells 10, 11. Both cells 10, 11 are located in a single, sleeve-shaped, elastic outer hull 15 for the group of cells 10, 11, which allows expansion without remarkable forces. The battery compartment (not shown) in which the arrangement is positioned also should not influence the expansion by remarkable forces.

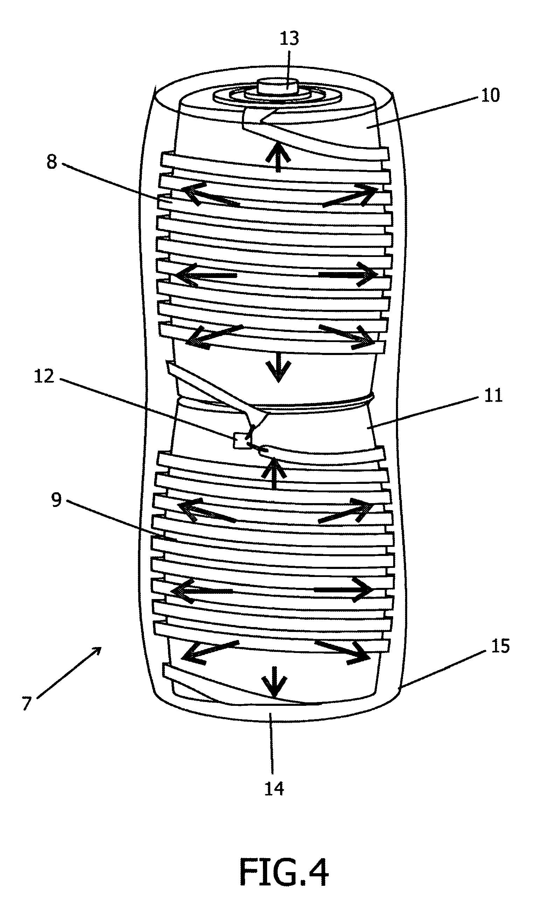

Figure 4 shows the deformation of the arrangement 7 shown in Figure 3 due to a pressure rise. As can be seen clearly in this Figure, the measurement lines 8, 9 are deformed due to the barrel-shaped expansion of the cells 10, 11, which can be monitored by the cell sensor 12. The monitored deformation gives an indication of the internal pressure and thus of the state of the cells 10, 11.

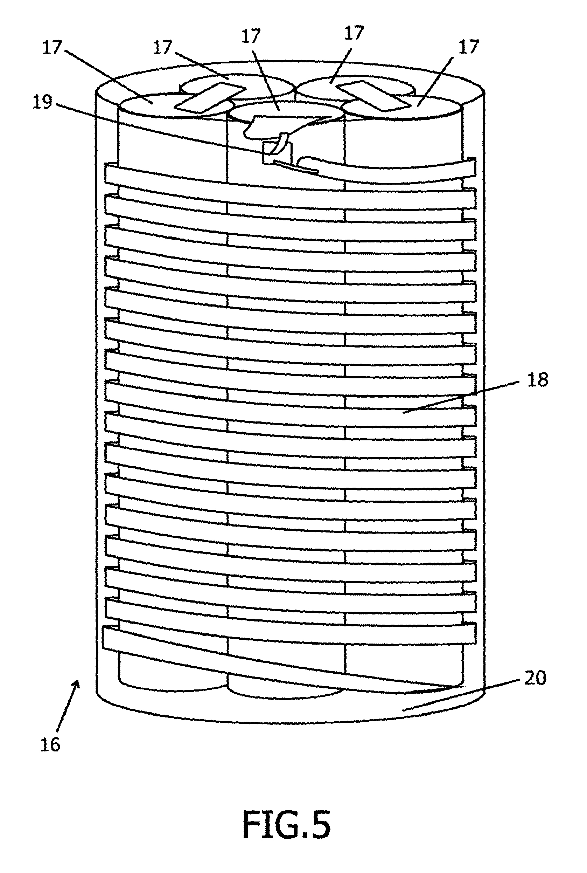

Figure 5 shows another arrangement 16 according to the invention in a normal state. The arrangement 16 comprises a group of substantially parallel-oriented cylindrical cells 17 bundled together by means of a coil-shaped measurement line 18. The measurement line 18 is connected to a sensor circuit 19 to monitor deformation of the cells 17 due to a pressure rise. The arrangement 16 is encapsulated by an elastically deformable outer hull 20.

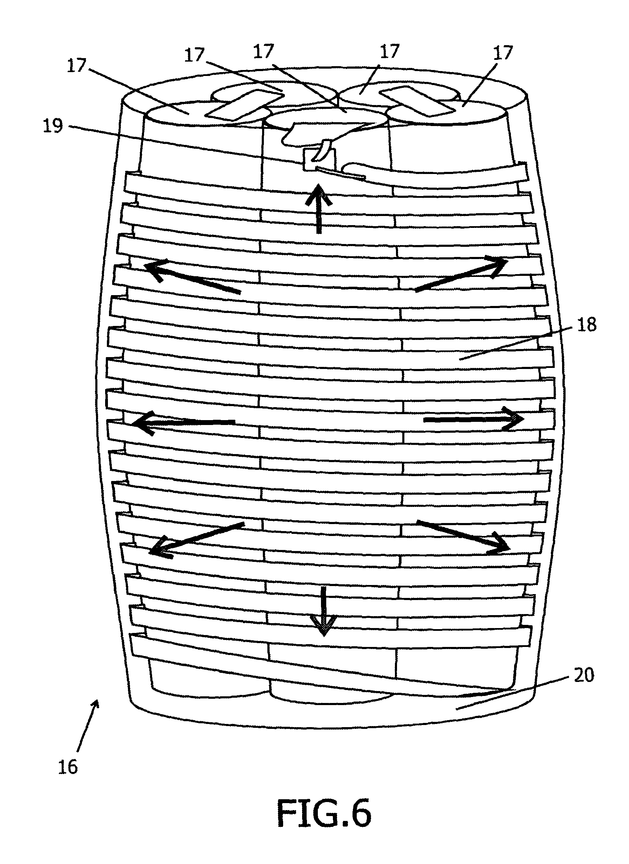

Figure 6 shows the arrangement 16 as shown in Figure 5 in an expanded state due to a pressure rise within one or more cells 17. In this illustrative embodiment in the expanded state, the bundle of cells 17 have been subjected to a barrel-shaped deformation. Due to the deformation of the cells 17, the measurement line 18 is stretched. This stretching and the intensity of stretching of the measurement line 18 can be detected by the sensor cell 19. These pressure-related data can subsequently be transmitted wirelessly to a battery management system, which is, for example, incorporated in a battery charger (not shown). Dependent on the (over)pressure detected in the cells 17, appropriate action, for example switching off, can be taken by the battery charger.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. Use of the verb "comprise" and its conjugations does not exclude the presence of elements or steps other than those stated in a claim. The article "a" or "an" preceding an element does not exclude the presence of a plurality of such elements. The mere fact that certain measures are recited in mutually different dependent claims does not indicate that a combination of these measures cannot be used to advantage.

## Claims

1. Arrangement for monitoring pressure within a battery cell, comprising:
at least one battery cell, and
at least one strain gauge for monitoring mechanical deformation of the battery cell, said strain gauge being at least partially wound around a cell casing of said battery cell,
**characterized in that** said strain gauge is electronically coupled to a processing unit attached to the cell casing for processing the mechanical deformation monitored by the strain gauge.

2. Arrangement according to claim 1, **characterized in that** said strain gauge is at least partially wound helically around said cell casing.

3. Arrangement according to claim 2, **characterized in that** said strain gauge is at least substantially coil-shaped.

4. Arrangement according to any one of the preceding claims , **characterized in that** said processing unit is adapted to communicate with an external device.

5. Arrangement according to claim 4, **characterized in that** said processing unit is adapted to communicate wirelessly with the external device.

6. Arrangement according to any one of the preceding claims, **characterized in that** said processing unit is powered by means of induced electricity.

7. Arrangement according to any one of the preceding claims, **characterized in that** said processing unit is powered by the battery cell.

8. Arrangement according to claim 4 or 5, **characterized in that** said strain gauge is also adapted for use as an antenna to allow the processing unit to communicate with the external device.

9. Arrangement according to any one of the preceding claims, **characterized in that** said battery cell comprises an outer hull, wherein the strain gauge is substantially positioned between the cell casing and the outer hull.

10. Arrangement according to any one of the preceding claims, **characterized in that** said arrangement comprises multiple battery cells, wherein the strain gauge is at least partially wound around the cell casing of each battery cell.

11. Method of monitoring pressure within a battery cell, comprising the step of:
measuring the mechanical deformation of a battery cell by at least one strain gauge attached to an outer surface of a cell casing of said battery,
**characterized in that** the method further comprising the steps of:
processing the mechanical deformation monitored by the strain gauge by means of a processing unit electronically coupled to said strain gauge to obtain pressure related data, and
allowing the processing unit to communicate with an external device for wireless transmission of the pressure-related data from the processing unit to said external device.

12. Method according to claim 11, **characterized in that** communication between the processing unit and the external device according to step C) is realized by means of the strain gauge acting as antenna.

## Patentansprüche

1. Anordnung zur Drucküberwachung in einer Batteriezelle, mit:
mindestens einer Batteriezelle und
mindestens einem Dehnungsmesser zur Überwachung mechanischer Verformung der Batteriezelle, wobei der Dehnungsmesser zumindest teilweise um ein Zellengehäuse der Batteriezelle gewickelt ist,
**dadurch gekennzeichnet, dass** der Dehnungsmesser an eine an dem Zellengehäuse angebrachte Verarbeitungseinheit elektronisch gekoppelt ist, um die von dem Dehnungsmesser überwachte, mechanische Verformung zu verarbeiten.

2. Anordnung nach Anspruch 1, **dadurch gekennzeichnet, dass** der Dehnungsmesser zumindest teilweise spiralförmig um das Zellengehäuse gewickelt ist.

3. Anordnung nach Anspruch w, **dadurch gekennzeichnet, dass** der Dehnungsmesser zumindest im Wesentlichen spulenförmig ist.

4. Anordnung nach einem der vorangegangenen Ansprüche, **dadurch gekennzeichnet, dass** die Verarbeitungseinheit so eingerichtet ist, dass sie mit einer externen Einrichtung kommuniziert.

5. Anordnung nach Anspruch 4, **dadurch gekennzeichnet, dass** die Verarbeitungseinheit so eingerichtet ist, dass sie mit der externen Einrichtung drahtlos kommuniziert.

6. Anordnung nach einem der vorangegangenen Ansprüche, **dadurch gekennzeichnet, dass** die Verarbeitungseinheit mit Hilfe induzierter Elektrizität gespeist wird.

7. Anordnung nach einem der vorangegangenen Ansprüche, **dadurch gekennzeichnet, dass** die Verarbeitungseinheit von der Batteriezelle gespeist wird.

8. Anordnung nach Anspruch 4 oder 5, **dadurch gekennzeichnet, dass** der Dehnungsmesser ebenfalls zur Verwendung als eine Antenne eingerichtet ist, damit die Verarbeitungseinheit mit der externen Einrichtung kommunizieren kann.

9. Anordnung nach einem der vorangegangenen Ansprüche, **dadurch gekennzeichnet, dass** die Batteriezelle eine äußere Hülle umfasst, wobei der Dehnungsmesser im Wesentlichen zwischen dem Zellengehäuse und der äußeren Hülle platziert ist.

10. Anordnung nach einem der vorangegangenen Ansprüche, **dadurch gekennzeichnet, dass** die Anordnung mehrere Batteriezellen umfasst, wobei der Dehnungsmesser zumindest teilweise um das Zellengehäuse jeder Batteriezelle gewickelt ist.

11. Verfahren zur Drucküberwachung in einer Batteriezelle, wonach
die mechanische Verformung einer Batteriezelle von mindestens einem Dehnungsmesser, der an einer Außenfläche eines Zellengehäuses der Batterie angebracht ist, gemessen wird,
**dadurch gekennzeichnet, dass** das Verfahren weiterhin Schritte umfasst, wonach:
die von dem Dehnungsmesser überwachte, mechanische Verformung mit Hilfe einer Verarbeitungseinheit, die an den Dehnungsmesser elektronisch gekoppelt ist, um druckbezogene Daten zu erhalten, verarbeitet wird, und
die Verarbeitungseinheit mit einer externen Einrichtung zur drahtlosen Übertragung der druckbezogenen Daten von der Verarbeitungseinheit zu der externen Einrichtung kommunizieren kann.

12. Verfahren nach Anspruch 11, **dadurch gekennzeichnet, dass** Kommunikation zwischen der Verarbeitungseinheit und der externen Einrichtung gemäß Schritt C) mit Hilfe des als Antenne wirkenden Dehnungsmessers realisiert wird.

## Revendications

1. Dispositif pour contrôler la pression dans une cellule de batterie, comprenant :
au moins une cellule de batterie, et
au moins une jauge de contrainte pour contrôler la déformation mécanique de la cellule de batterie, ladite jauge de contrainte étant au moins partiellement enroulée autour d'un boîtier de cellule de ladite cellule de batterie,
**caractérisé en ce que** ladite jauge de contrainte est électroniquement couplée à une unité de traitement qui est fixée au boîtier de cellule de manière à traiter la déformation mécanique qui est contrôlée par la jauge de contrainte.

2. Dispositif selon la revendication 1, **caractérisé en ce que** ladite jauge de contrainte est au moins partiellement enroulée hélicoïdalement autour dudit boîtier de cellule.

3. Dispositif selon la revendication 2, **caractérisé en ce que** ladite jauge de contrainte est au moins sensiblement en forme de bobine.

4. Dispositif selon l'une quelconque des revendications précédentes 1 à 3, **caractérisé en ce que** ladite unité de traitement est adaptée de manière à communiquer avec un dispositif externe.

5. Dispositif selon la revendication 4, **caractérisé en ce que** ladite unité de traitement est adaptée de manière à communiquer sans fil avec le dispositif externe.

6. Dispositif selon l'une quelconque des revendications précédentes 1 à 5, **caractérisé en ce que** ladite unité de traitement est mise sous tension au moyen d'électricité induite.

7. Dispositif selon l'une quelconque des revendications précédentes 1 à 6, **caractérisé en ce que** ladite unité de traitement est mise sous tension par la cellule de batterie.

8. Dispositif selon la revendication 4 ou selon la revendication 5, **caractérisé en ce que** ladite jauge de contrainte est également adaptée de manière à être utilisée en tant qu'antenne afin de permettre à l'unité de traitement de communiquer avec le dispositif externe.

9. Dispositif selon l'une quelconque des revendications précédentes 1 à 8, **caractérisé en ce que** ladite cellule de batterie comprend une coque extérieure, dans lequel la jauge de contrainte est sensiblement positionnée entre le boîtier de cellule et la coque extérieure.

10. Dispositif selon l'une quelconque des revendications précédentes 1 à 9, **caractérisé en ce que** ledit dispositif comprend des cellules de batterie multiples, dans lequel la jauge de contrainte est au moins partiellement enroulée autour du boîtier de cellule de chaque cellule de batterie.

11. Procédé de contrôle de la pression dans une cellule de batterie, comprenant l'étape suivante consistant à :
mesurer la déformation mécanique d'une cellule de batterie par au moins une jauge de contrainte qui est fixée à une surface extérieure d'un boîtier de cellule de ladite batterie,
**caractérisé en ce que** le procédé comprend encore les étapes suivantes consistant à :
traiter la déformation mécanique qui est contrôlée par la jauge de contrainte au moyen d'une unité de traitement qui est couplée électroniquement à ladite jauge de contrainte afin d'obtenir des données liées à la pression, et
permettre à l'unité de traitement de communiquer avec un dispositif externe pour la transmission sans fil des données liées à la pression à partir de l'unité de traitement audit dispositif externe.

12. Procédé selon la revendication 11, **caractérisé en ce que** la communication entre l'unité de traitement et le dispositif externe selon l'étape C) est réalisée au moyen de la jauge de contrainte qui fait fonction d'antenne.
